# EUROPEAN PATENT APPLICATION

(11) **EP 2 703 222 A1**
(43) Date of publication of application: **05.03.2014**
(21) Application number: 13460060.0
(22) Date of filing: 02.09.2013
(51) Int. Cl.: B60R 3/00

(54) **Folding foot step**

(30) Priority: 03.09.2012 PL 40062412
(71) Applicant: Gerlach, Maria, 35-612 Rzeszów (PL)
(72) Inventor: Gerlach, Maria, 35-612 Rzeszów (PL)

(57) **Abstract**

Folding foot step, to be used when loading and unloading roof racks in automobiles, is characteristic in the fact that it has a platform (**1**) which is connected, in a way allowing for rotation or releasability, with at least one support bracket (**2**) situated on one side of a shorter edge of the platform (**1**) and the foot step is additionally provided with a blocking system for the working position of the platform (**1**) in relation to the brackets (**2**), so that in a working position the angle between the platform (**1**) and the brackets (**2**) is in the range of 90-130°.

## Description

The object of the invention is a folding foot step/stand to be used when loading and unloading roof racks in automobiles.

Previously known folding step stands are usually equipped with a platform supported on legs releasably attached to platform. For instance, the stage deck known from the description of Polish utility model no. 65275 has a platform panel embedded onto a quadrilateral frame supported on four telescopic legs releasably attached to a frame by means of clamps, which are additionally fastened with screws.

Due to the height of currently used automobiles, particularly the increasingly popular vans, minivans and SUVs, it is practically impossible for individuals of average height to comfortably load and unload car roof racks. Operations involving both roof racks and cargo carriers, frequently used for transporting sports equipment such as bicycles or skis, are difficult and persons handling roof racks must use the car door sill as a support for their feet and are forced to work in an uncomfortable position. The use of previously known folding step stands for operations involving car roof racks poses problems; especially the transport of such step stands in the car is a problem.

The purpose of the invention is to design a folding foot step which is simple in its construction, is easy to transport, and facilitates handling car roof racks.

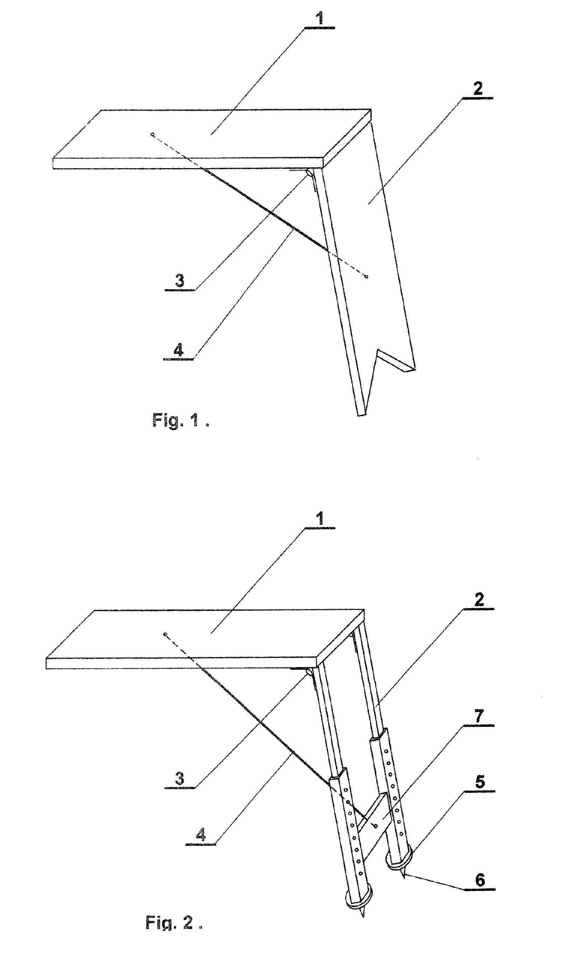

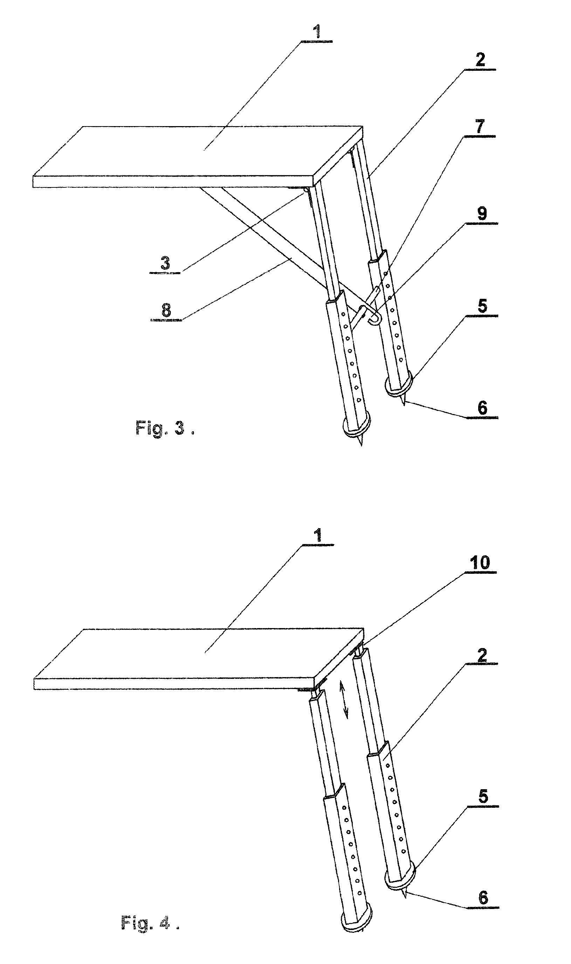

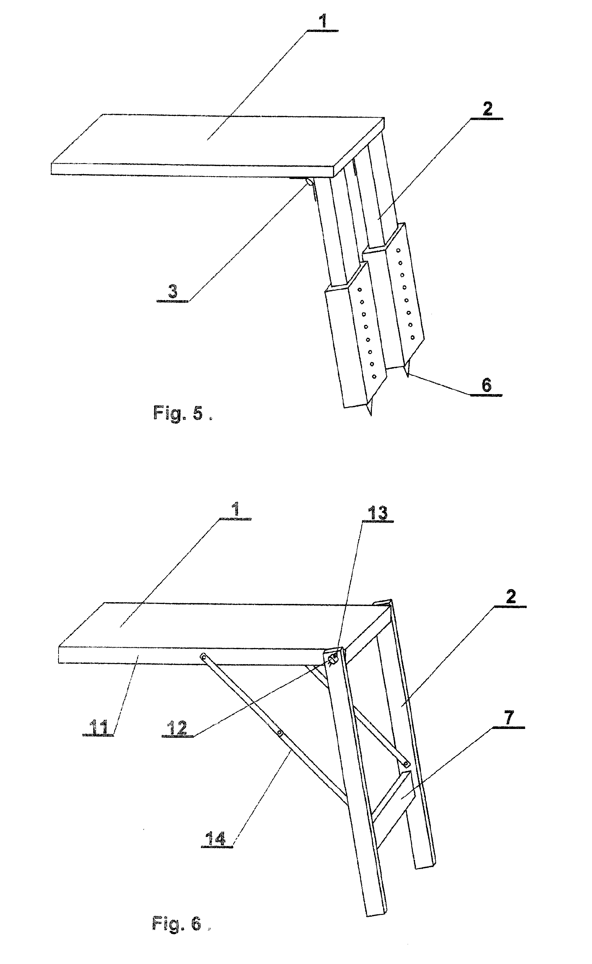

The foot step, in accordance with the essence of the present invention, has a platform which is preferably in the shape of a rectangle, and is connected in a way allowing for rotation or releasability with at least one support bracket situated on one side of the platform's shorter edge, or, preferably with two brackets, preferably connected with each other via a crossbar, and the foot step is additionally equipped with a blocking system for the working position of the platform in relation to the brackets, so that the angle between the platform and the brackets is in the range of 90-130°.
The brackets preferably are telescopic brackets with adjustable height and preferably ending with pointed feet.
Preferably, the blocking system consists of a clamp mounted on the underside of the platform, and a cord permanently attached to the clamp on one side while its other end is permanently attached to the single bracket or to the crossbar linking the brackets. The length of the cord is selected in such a way as to enforce the position of the platform in relation to the brackets within the range of 90 -130° in working position.
Also preferably, the block consists of a blocking arm which on one side is attached to the underside of the platform in a way allowing for movement and close to its other end is equipped with an elongated open hole in which the crossbar linking the brackets is situated in working position.
Another preferable solution is a block consisting of angular fittings which are permanently attached to the longer sides of the platform and whose opening angle is in the range of 90-130°, and the free part of the fittings constitutes a profile whose shape is adjusted to the shape of gaps in the top parts of the brackets.
An alternative preferable solution involves a connection of the platform with brackets mounted on the underside of the platform, close to its shorter edge, by means of hinges while the upper plane of the brackets is situated at the angle within the range of 90-130° in relation to the bracket axes.
The foot step, unfolded and supported against the car door sill with the free end of its platform, allows for easy access to a car roof rack, and when folded occupies little space in the car boot.
The platform and the brackets of the foot step can be made of wood, metal, plastic or a combination of these materials.
The object of the invention and examples of its embodiment are shown in the illustration, where Fig. 1 shows the foot step with single bracket and the block in the form of a cord, isometric view, Fig. 2 - the same foot step with two brackets and the block in the form of a cord, isometric view, Fig. 3 - the same foot step with an alternative type of block, isometric view, Fig. 4 - the same step stand with another alternative solution used for the block, isometric view, Fig. 5. - the same step stand with yet another alternative solution used for the block, isometric view, and Fig. 6 - the foot step with two blocking elements attached to the platforms and the brackets in a way allowing for rotation.

Example 1. The foot step has a platform **1** connected in a way allowing for rotation, with a single bracket **2** by means of hinges **3.** A cord **4** is permanently attached to the platform **1** and the bracket **2** and constitutes a block for the position of the platform **1** with respect to the bracket **2**, and the length of the cord **4** ensures the position of the platform **1** in relation to the brackets **2** at the angle of 120°.

Example 2. The foot step has a platform **1** connected, in a way allowing for rotation, via a hinge **3** with telescopic brackets **2** situated along one side of the shorter edge of the platform **1** where the telescopic brackets **2** have adjustable height and end with pointed **6** feet **5**. Brackets **2** are connected with each other via a crossbar **7.** The foot step is equipped with a working position block consisting of a cord **4** attached permanently to the platform **1** with one end and with the other end attached permanently to the crossbar **7**. The length of cord **4** enforces the position of the platform **1** with respect to the brackets, at the angle of 110°.

Example 3. The foot step has a platform **1** connected, in a way allowing for rotation, via a hinge **3** with telescopic brackets **2** situated along one side of the shorter edge of the platform **1** where the telescopic brackets **2** have adjustable height and end with pointed **6** feet **5**. Brackets **2** are connected with each other via a crossbar **7**. The foot step is equipped with a working position block consisting of a blocking arm **8** which at one end is attached to the underside of the platform **1** in a way allowing for movement and close to its other end is equipped with an elongated open hole **9** in which the crossbar **7** linking the brackets **2** is situated in working position.

Example 4. The foot step has a platform **1** connected with telescopic brackets **2** situated along one side of the shorter edge of the platform **1** where the telescopic brackets **2** have adjustable height and end with pointed **6** feet **5**. The foot step is equipped with a working position block consisting of angular fittings **10** which are permanently attached to the platform **1** and have an opening angle of 100°, and the free part of the angular fittings **10** constitutes a square profile and the top parts of the brackets **2** have gaps in the shape of a square and with dimensions which allow for inserting brackets **2** into the free parts of the fittings **10.**

Example 5. The foot step has a platform **1** connected in a way allowing for rotation by means of hinges **3** mounted on the underside of the platform **1** close to its shorter edge, with telescopic brackets **2** situated along one side of the shorter edge of the platform **1** where the telescopic brackets **2** have adjustable height and end with a pointed tip **6**. The upper surface of the brackets **2** is located at the angle of 125° in relation to the axes of the brackets **2**.

Example 6. The foot step has a platform **1** with holes situated along the longer edges **11** which are perpendicular to the surface of the platform **1** and close to their ending. The brackets **2** on both sides of the platform **1**, which are linked via a crossbar **7**, are fixed to a connecting pin **12** situated in these holes, in a way allowing for rotation. The connecting pin **12**, on both sides, is equipped with protective devices in the form of linchpins **13** which are located outside the brackets **2**. Blocking strips **14** consisting of two identical sections, connected in a way allowing for rotation, are attached to edges **11** and to each bracket **2** in a way allowing for rotation. The length of the blocking strip **14** enforces the position of the platform **1** in relation to the brackets at the angle of 130°.

## Claims

1. Folding foot step with a platform and brackets, **characteristic in the fact** that it has a platform (**1**) connected, in a way allowing for rotation or releasability, with at least one support bracket (**2**) situated on one side of the shorter edge of the platform (**1**), and the foot step is additionally equipped with a blocking system for the working position of the platform (**1**) in relation to the brackets (**2**), so that in a working position the angle between the platform (**1**) and the brackets (**2**) is in the range of 90-130°.

2. Folding foot step as claimed in point 1, **characteristic in the fact** that the platform (**1**) is in the form of a flat cuboid.

3. Folding foot step as claimed in point 1, **characteristic in the fact** that it is equipped with two brackets (**2**), which are telescopic brackets with adjustable height.

4. Folding foot step as claimed in point 1, **characteristic in the fact** that the brackets (**2**) are concluded with pointed (**6**) feet (**5**).

5. Folding foot step as claimed in point 1, **characteristic in the fact that** the brackets (**2**) are connected with each other via a crossbar (**7**) to which a cord (**4**) is permanently attached and whose other end is permanently fixed to the platform (**1**), and the length of the cord (**4**) is selected in such a way as to ensure that the angle between the platform (**1**) and the brackets (**2**) is in the range of 90 - 130°.

6. Folding foot step as claimed in point 1, **characteristic in the fact** that the brackets (**2**) are connected with each other via a crossbar (**7**), and attached to the underside of the platform (**1**) there is an open hole (**9**) in which the crossbar (**7**) linking the brackets (**2**) is situated in a working position and the length of a blocking arm (**8**) is selected in such a way as to ensure that the angle between the platform (**1**) and the brackets (**2**) is in the range of 90 - 130°.

7. Folding foot step as claimed in point 1, **characteristic in the fact** that permanently attached to the platform (**1**) there are angular fittings (**10**) whose opening angle is in the range of 90-130°, and the free part of the fittings (**10**) constitutes a profile whose shape is adjusted to the shape of gaps in the top parts of the brackets (**2**).

8. Folding foot step as claimed in point 1 or 6, **characteristic in the fact** that the free part of the angular fittings (**10**) constitutes a square profile and the top parts of the brackets (**2**) have gaps in the shape of a square and with dimensions which allow for inserting the brackets (**2**) into the free parts of the fittings (**10**).

9. Folding foot step as claimed in point 1, **characteristic in the fact** that platform (**1**) is connected with telescopic brackets (**2**) by means of hinges (**3**) mounted on the underside of the platform (**1**) close to its shorter edge and the upper surface of the brackets (**2**) is located at the angle of 90 - 130° in relation to the axes of the brackets (**2**).

10. Folding foot step as claimed in point 1, **characteristic in the fact** that the platform (**1**) has holes situated along the longer edges (**11**) which are perpendicular to the surface of the platform (**1**) and close to their ending, where on both sides of the platform (**1**) the brackets (**2**), attached to each other in a way allowing for rotation, are fixed to the connecting pin (**12**) situated in these holes and the connecting pin (**12**), on both sides, is equipped with protective devices in the form of linchpins (**13**) which are located outside the brackets (**2**), and in addition to that a blocking strip (**14**) consisting of two identical sections, connected in a way allowing for rotation, is attached to edges (**11**) and to each bracket (**2**) in a way allowing for rotation.
